# EUROPEAN PATENT APPLICATION

(11) **EP 1 708 426 A1**
(43) Date of publication of application: **04.10.2006**
(21) Application number: 05252063.2
(22) Date of filing: 01.04.2005
(51) Int. Cl.: H04L 12/56

(54) **Resource reservation in network routing**

(71) Applicant: BRITISH TELECOMMUNICATIONS public limited company, London EC1A 7AJ (GB)
(72) Inventor: The designation of the inventor has not yet been filed
(74) Representative: Lofting, Coreena Fiona Anne

(57) **Abstract**

The present invention relates to network routing and admission control, especially for applications requiring guaranteed quality of service over the Internet. The present invention provides a method of establishing a guaranteed quality of service link over a packet switched network between a source and a destination, the method comprising: determining whether packet traffic from a network node associated with the source to a network node associated with the destination exceeds a predetermined level; signalling an intermediate network node to receive predetermined packets from said source node and forward these to said destination node; forwarding said packets to the intermediate node; the intermediate node receiving said packets and forwarding these to said destination node.

## Description

### Field of the Invention

The present invention relates to network routing and admission control, and especially though not exclusively for applications requiring guaranteed quality of service over the Internet.

### Background

The use of the Internet for surfing the world wide web, email, and downloading files has increased rapidly in recent years. This type of application is well suited to the packet switched networks that make up the Internet, and which deliver packets on a "best effort" basis. Thus packets from a web page, email or music file for example are forwarded to a destination using a unique destination address, intermediate nodes forwarding the packets often using different routes to the destination on a hop by hop basis. That is each node forwards a packet to a next node based on routing tables and current network activity, without monitoring whether the packet "makes it" to its final destination. This is the basis of the well known Internet Protocol or IP, and is typically used in conjunction with a basic quality of service overlay such as TCP (transmission control protocol) which requests non-received or missing packets to be sent again over the IP network, until the entire file (all the packets) are received by the destination. This configuration has worked well for the above mentioned applications which are not time critical.

However recent applications such as on-demand media (Internet radio, music and video on demand), voice over IP (Internet phone) and on-line gaming require greater levels of quality of service such as guaranteed bandwidth in order to provide real time or near real time connectivity. In a phone conversation for example, dropped packets will be noticeable as delays or missing speech. Whilst TCP can rearrange packets received out of order, such occurrences are problematic for real time applications which typically cannot wait for the delayed packet.

Various methods of applying higher levels or guaranteed quality of service (QoS) to the Internet have been used. For example where the basic IP network is supported above an ATM (asynchronous transfer mechanism) network which supports (virtual) circuit switching between nodes, the IP routing of individual nodes can be updated depending on the underlying ATM virtual circuit activity in order to maximise the effective bandwidth between Internet gateways. An example of this is known as resource reservation protocol or RSVP, as is described in more detail in US2004/028052, WO031929 and WO04014000. However such adaptations are complicated, and not all networks which form part of the Internet are ATM based.

Another well known method works at the same transport layer as the IP implemented network. MPLS (multi-protocol label switching) requires additional information (labelling) in each packet in order to direct the packet's routing between particular nodes or routers. However this requires MPLS enabled routers to be extant in the network, and these are not ubiquitous. Further the gateway offering the high QoS session does not have direct control over the MPLS router configuration and so cannot be sure of their effectiveness in guaranteeing the required level of QoS.

A similar but gateway implemented IP router control arrangement is described in EP1463248. This uses additional control information in the IP packet header but requires compatible routers within the network by which to implement the routing.

In another method, the gateway nodes connected to the Internet estimate whether there is sufficient bandwidth between the gateways associated with a source and destination respectively. If sufficient bandwidth is estimated, the gateway allows a predetermined level QoS connection or session; whereas if insufficient bandwidth is estimated, the QoS connection is denied. However as network activity is dynamic and the network is typically hidden from the gateway nodes, this can lead to large errors in the bandwidth availability estimations. If the gateway over-estimates bandwidth, then the QoS session may not be supported, whereas if it under-estimates the bandwidth, the network and the ability for the gateway to provide QoS sessions or connections is underutilised resulting in reduced revenue. An example of bandwidth estimation on a multi-hop IP network is described in WO0233889.

### Summary of the Invention

In general terms, the present invention aims to provide a method of routing traffic across a network in order to provide guaranteed quality of service (QoS) sessions. In order to determine whether a QoS session can be provided, a source gateway node of the network first determines whether it can provide the bandwidth or other resource required to provide the QoS session between said node and a corresponding gateway node associated with an intended destination. This may be achieved using a bandwidth estimation algorithm or by determining the failure rate of packets sent to the destination node on other sessions it is handling; or some other method known in the art. If the available bandwidth or other resource that is required to provide the QoS session in not available, the source node signals a third or intermediate gateway node to forward predetermined packets from the source node to the destination node.

By routing packets via a third or intermediate gateway node, a different notional or virtual route is provided through the network from the source node to the destination node, this different route providing the required network resources (eg bandwidth) to support the session at the required QoS level. The different route is a route only notionally, in the sense that what has been done at the edge of the network affects the routing within the network, for example at an IP based hop level, but without actually modifying anything within the network itself. All that has been modified is introducing some intermediate "relays" at the edge of the network between the source and destination. This means that if the network is hidden from the gateways, it can remain hidden even though the effective routing within it has been adjusted. The more "direct" route between the source and destination nodes may pass through a congested area with little spare bandwidth for example. Thus the use of the intermediate node provides a "detour" which avoids this congested area (or node), and effectively provides an alternative route to the destination node but without requiring complex routing solutions within the network itself. Such network centric solutions would require involvement of the nodes within the network, and would therefore be relatively complex and expensive to implement.

By contrast, with some simple enhancements to a (small) number of (eg edge gateway) nodes, alternative routing can be provided through the network without any knowledge or re-configuration of that network. In other words it can remain "unknown", or hidden which is typically the case with Internet gateway nodes which do not "see" the detail of the hop by hop connections between the network nodes. By providing alternative routing using third or "proxy" gateways, additional QoS sessions or connections can be provided by the source gateway than would otherwise be the case with a congested network, and thereby increase the revenue the gateway nodes and network can generate.

In an embodiment, the third gateway or intermediate node first determines the available bandwidth between said node and the destination node, and between the third gateway node and the source node. Alternatively the source node determines the available bandwidth to an intermediate node and if sufficient signals this intermediate node to determine if it has sufficient bandwidth available looking toward the destination node. If these bandwidths are both above that required for the QoS session, then the third gateway signals the source gateway that it can handle the requested QoS session. The source gateway then addresses packets onto the network associated with the requested QoS session to the third gateway. The third gateway recognises these packets, and re-addresses them to the destination gateway.

It will be appreciated that fourth or further additional or "proxy" gateways (for example second, third, fourth and so on intermediate nodes) could be used in a "chain" of gateways between the source and destination gateways. Each intermediate gateway is forwarded a request to re-route the requested QoS session packets to the destination gateway, and this may be achieved directly, or by using a further intermediate gateway (eg a fourth). However this additional routing is transparent to the source gateway node as well as other prior or previous gateways in the chain, which simply forward packets to their next immediate gateway (or in the case of the last intermediate gateway, to the destination gateway).

In particular in one aspect there is provided a method of establishing a communications session having a predetermined resource requirement (eg a minimum bandwidth) between a source node and a destination node associated with a (eg IP) network which comprises a plurality of interconnected nodes (eg routers). The method comprises determining whether the resource requirement can be provided for a session between the source node and an intermediate node, and the intermediate node and a further node (eg the destination node or a further intermediate node). This determination can be achieved for example by the source node estimating the available resource between the source node and the intermediate node; and by signalling the intermediate node to estimate the available resource between itself and the further node. This estimate can then be sent back to the source node for processing to determine whether the estimated sessions can be used to provide the required resource using sessions via the intermediate node to the destination node. If this is the case, then the method further comprises establishing sessions providing said resource requirement between said source node and said intermediate node, and between said intermediate node and the further node. The intermediate node is arranged to couple the sessions in order to provide a session providing the resource requirement between the source node and the destination node (either directly where the further node is the destination node or via one or more further intermediate nodes).

The coupling of the sessions can be achieved in any known manner, for example by re-directing packets received by the intermediate node from the source node to the destination node or further intermediate node(s).

The source node may first determine whether the resource requirement can be provided with a session "directly" between the source node and the destination node.

The term source node is used here to in a general sense as the originating source for this method, and does not necessarily mean the original source node or gateway node associated with the original source. For example the source node could refer here to an intermediate node "looking forward" to further intermediate nodes. The source node thus refers to the starting or fist node in the node sequence used to implement the method.

In another aspect there is provided a method of operating a source node in order to establish a communications session having a predetermined resource requirement between said source node and a destination node associated with the network which comprises a plurality of interconnected nodes. The method comprises determining whether the resource requirement can be provided for a session between the source node and an intermediate node, and the intermediate node and a further node - the later by signalling the intermediate node for example as noted above. Further, establishing sessions providing the resource requirement between the source node and the intermediate node, and between the intermediate node and the further node. The intermediate node is arranged or signalled to couple the sessions in order to provide a session providing the resource requirement between the source node and the destination node using the intermediate node.

The functions not actually performed at the source node may be achieved by sending suitable messages or requests to the intermediate node.

In another aspect there is provided a method of operating an intermediate node in order to establish a communications session having a predetermined resource requirement between a source node and a destination node associated with the network which comprises a plurality of interconnected nodes. The method comprises receiving a request from the source node to provide a session having the resource requirement to the destination node, and in response determining whether the resource requirement can be provided for a session between the intermediate node and a further node. Assuming this to be the case, in one embodiment a "can do" message is sent back to the source node, which in return may send an "open session on my behalf' message. In response the intermediate node establishes sessions providing the resource requirement between the source node and the intermediate node, and between the intermediate node and the further node. The intermediate node also couples the sessions in order to provide a session providing the resource requirement between the source node and the destination node using the intermediate node.

In one embodiment the resource determination or estimation takes the form of estimating whether there is (n+1) resource requirements between nodes, where n is in one configuration the total number of intermediate nodes involved from the original network source node to the ultimate network destination node. This extra requirement for resources is to counter the possibility that the various node to node sessions may all use a common network node such as an IP router, so that if all the sessions are set up then that router will be implementing n+1 sessions.

Whilst the embodiments describe application in a "connectionless" network such as the packet switched Internet, the various methods and apparatus provided by the invention could also be applied to connected networks, such as an ATM network for example. The actual mechanics of routing within the network remain hidden or of not relevance to the gateway nodes.

There is also provided a method of establishing a guaranteed quality of service link over a packet switched network between a source and a destination, the method comprising: determining whether packet traffic from a network node associated with the source to a network node associated with the destination exceeds a predetermined level; signalling a proxy network node to receive predetermined packets from said source node and forward these to said destination node; forwarding said packets to the proxy node; the proxy node receiving said packets and forwarding these to said destination node.

There is also provided a method of operating a network node in order to establish a communications session having a predetermined resource requirement between a source node and a destination node associated with said network which comprises a plurality of interconnected nodes, the method comprising: determining whether said resource requirement can be provided for a session between a network node and another said node; establishing sessions providing said resource requirement between said network node and said further in order to provide a session providing said resource requirement between said source node and said destination node using said network and further nodes.

There is also provided a method of operating a network node comprising: receiving a request to establish a session having a minimum resource requirement with a destination node; determining whether said session can be provided by establishing sessions having said resource requirement between said network node and said destination node via an intermediate node.

There is also provided a method of operating a network node comprising: receiving a request to establish a session having a minimum resource requirement with a destination node; determining whether said session can be provided by establishing a session having said resource requirement between said network node and said destination node; establishing said session by re-routing session traffic received at said network node to said destination node.

There are also provided various apparatus such as source and intermediate nodes, networks and systems or parts thereof corresponding to the above defined methods.

### Brief Description of the Drawings

Embodiments are described with respect to the following drawings, by way of example only and without intending to be limiting, in which:
Figure 1 illustrates routing packets across an unknown multi-hop network;
Figure 2 illustrates routing packets across an unknown multi-hop network according to an embodiment;
Figure 3 illustrates signalling between gateway nodes according to an embodiment;
Figure 4 illustrates the way the IP packet structure is modified through the embodiment of figure 2;
Figure 5 is a flow chart of operation of a gateway node according to an embodiment; and
Figure 6 is a flow chart of operation of a gateway node according to another embodiment.

### Detailed Description

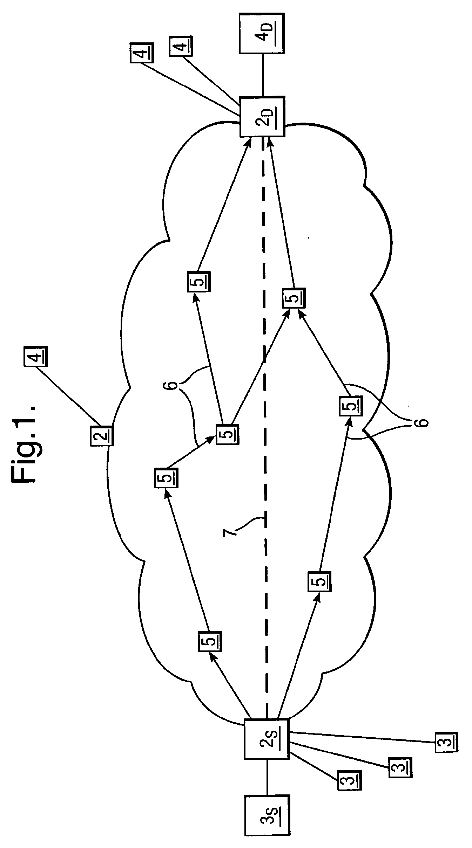

Figure 1 shows a known arrangement for admission control of QoS sessions, calls or "connections" between a source 3 and a destination 4, over a network. The source 3 may be a personal computer and the destination a web page or video-on-demand server for example. These end devices (eg 3s and 4d) may be coupled to their respective gateway or network edge nodes (2s and 2d) by any means know in the art, including for example a further intermediate network. The network 4 is illustrated as a multi-hop network, for example the Internet which is controlled according to the Internet Protocol (IP), at the network layer at least.

A multi-hop network comprises a number of nodes or routers 5 which are connected to other nodes and together form a variety of pathways across the network 1 from one edge point 2 to another. The edge nodes or gateways 2 forward packets onto the network 1 which each include a destination address. The packets are passed from node to node 5 via hops 6 according to their final destination address as well as current network conditions and routing tables within each node. Thus each packet may take a different route, but still end up at the same destination node or gateway 2.

For example IP packets from a source 3s are labelled with a final destination (4d) and forwarded to a source gateway 2s which forwards the packets onto the network 1. The packets are passed via various multi-hop routes 6 to a destination gateway 2d, and on to the final destination 4d as shown. Example multi-hop routes 6 are illustrated in figure 1. A virtual route 7 can be defined between the gateway nodes 2s and 2d, however this is only notional and is the effective combination of the actual routes indicated by the hops 6 between the interconnected nodes or routers 5.

In supporting a predetermined level of QoS session between a source 3s and a destination 4d, the source gateway 2s must determine whether the network 1 has sufficient bandwidth or other resources available between it and the destination gateway 2d. Notionally this is the bandwidth of the virtual route 7, however in actuality it is a complex combination of available bandwidths on various multi-hop routes 6 making up the available connections between the gateway nodes 2. This is difficult to determine as the actual multi-hop routes and their respective bandwidths vary according to network conditions in a complex manner, and because in any case they are generally hidden from the edge nodes or gateways 2.

Various virtual route 7 bandwidth determining methods are known, including estimating the available bandwidth using test packets, or basing this on existing session packet flows between the two gateways (2s and 2d).
If one of the routers (5x) becomes congested, then packets passing through this may be dropped or delayed, whilst packets through other routes not including 5x may be unaffected. However the overall effect is to reduce the overall or combined available bandwidth of the virtual route 7.

Whatever bandwidth availability determination is used, if this is found to be below the requirements of a requested QoS session, the source gateway 2s will deny the session request.

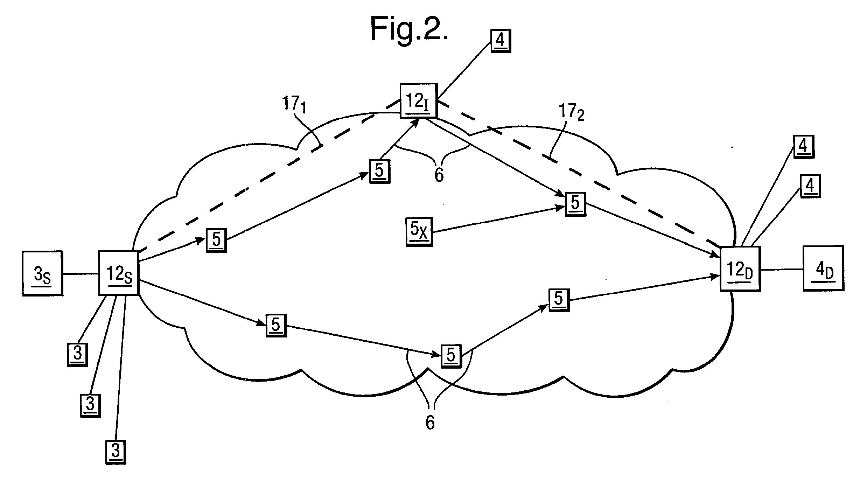

A network arrangement according to an embodiment is illustrated in figure 2. Parts equivalent with figure 1 are labelled the same. This network arrangement however comprises three gateway nodes 12 involved in providing a QoS session between the source 3s and destination 4d. In this arrangement the congested router or node 5x is bypassed by using an intermediate gateway node 12i which forwards packets sent from the source gateway node 12s to the destination gateway 12d. By utilising an extra gateway node 12i, the hops 6 used between the routers 5 are altered and are effectively "biased" away from the congested router 5x. If the use of this extra gateway node 12i did not relieve the congestion between the source and destination, then further gateway nodes might be tried until the congestion is bypassed.

The figure illustrates a modified virtual path 17₁ and 17₂ corresponding to two coupled QoS sessions - one from the source node 12s to the intermediate node 12i, and one from the intermediate node 12i to the destination node 12d. The intermediate node 12i couples these two sessions (17₁ and 17₂) together such that effectively a single session between the source node 12s and the destination node 12d is provided which has the required bandwidth or other resource to support the requested QoS session. The session coupling performed by the intermediate node 12i is described in more detail below.

Other sessions to the destination gateway 12d which are supported by the source gateway 12s are unaffected by the use of the intermediate gateway 12i, and are routed as normal by the network routers 5 between the source and destination gateways 12s and 12d respectively. Furthermore, more than one intermediate gateway 12i may be used, as will be described below, in order to avoid the or numerous congested part(s) of the network 1.

An advantage of this arrangement is that the network 1 can remain unknown to the gateways 12, with no need for routing modification at the network router 5 level. Thus although the hops 6 used to provide the QoS call are modified by the use of the intermediate gateway 12i, this is achieved without the use of knowledge of the detailed routing of the network itself, but merely by the use of one (or more) intermediate edge or gateway nodes 12. Thus compared with legacy systems, only minor modification to (some) existing edge routers 12 is required, and no modification of the core network routers 5 is required. These modifications are described in more detail below.

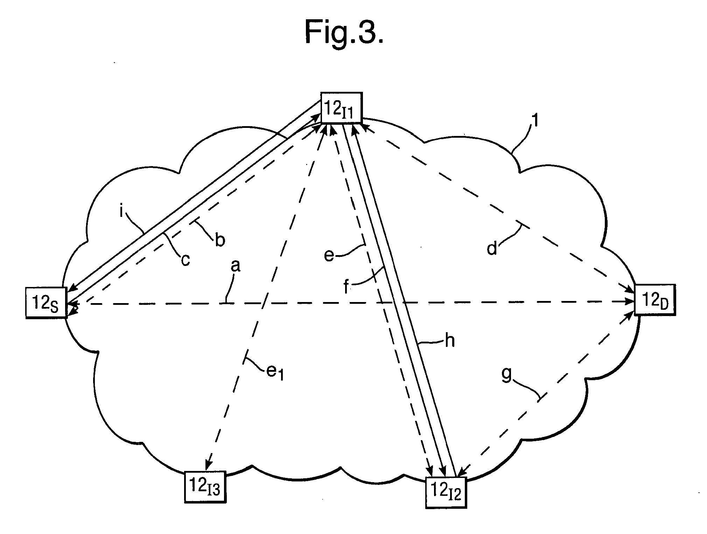

Referring now to figure 3, a signalling schematic is shown which illustrates the set-up of a QoS call or session from a source gateway 12s to a destination gateway 12d across an unknown network 1. A QoS call or session refers to a session provided on the network between a network node 12s associated with or connected to a source device 3s and a destination node 12d associated with or connected to a destination device 4d. Furthermore the session must be supported at a predetermined level of some resource (eg bandwidth) in order to provide the required (guaranteed) quality of service (QoS).

The source gateway 12s first determines if there is sufficient available bandwidth for a requested QoS session between the source node 12s and the destination gateway 12d. This is illustrated by dashed line a, and may be achieved by any method known in the art for example bandwidth estimation.

If the network 1 is congested or for some other reason insufficient bandwidth is available for the call, then the source gateway 12s determines whether there is sufficient bandwidth for the call between it (12s) and another gateway node 12i₁ - illustrated by dashed line *b.*

If there is sufficient bandwidth, then the source gateway 12s signals this intermediate gateway 12i₁ to determine whether it has sufficient bandwidth available between it (12i₁) and the destination gateway 12d - illustrates by line c.

The intermediate gateway then determines whether there is sufficient bandwidth between itself and the final destination gateway 12d - illustrated by dashed line d.

If there isn't, for example because of network congestion between these two gateways, then it determines whether there is sufficient bandwidth for the call between it (12i₁) and another intermediate gateway node 12i₂ - illustrated by dashed line e.

If there is sufficient bandwidth, then the first intermediate gateway 12i₁ signals this additional or second intermediate gateway 12i₂ to determine whether it has sufficient bandwidth available between it (12i₂) and the destination gateway 12d - illustrates by line *f*.

The second intermediate gateway then determines whether there is sufficient bandwidth between itself and the final destination gateway 12d - illustrated by dashed line g.

Assuming for the moment that there is sufficient bandwidth to support the QoS call request, then the second intermediate gateway 12i₂ signals the first intermediate gateway 12i₁ that it can support the session - illustrated by line h.

In turn, the first intermediate gateway 12i₁ signals the source gateway 12s that it can handle the QoS call - illustrated by line i.

Additional intermediate gateways 12i may be used in a chain of gateway nodes all the way to the destination gateway 12d. At any point if an intermediate gateway node (eg 12i₂) indicates to a previous intermediate gateway (eg 12i₁) that it cannot provide sufficient bandwidth for the requested QoS call, then the previous intermediate gateway (eg 12i₁) determines whether other intermediate gateways can support the call or session. Failing this, the first intermediate gateway 12i₁ will signal back to the source gateway 12s that it cannot guarantee the necessary bandwidth, and if the source gateway 12s cannot find any other intermediate gateways to support the call, then it will deny the QoS session request. However, as will be appreciated, the opportunity for supporting such calls is greatly enhanced using this arrangement of network routing.

It will also be appreciated that the actual signalling protocol described could be varied whilst still achieving the same effect. For example an initial signal could be sent to an intermediate gateway (eg 12i₁) which then determines available bandwidth both between itself and the destination (or another intermediate) gateway and itself and the requesting or source gateway 12s. If both sides of the link between the source gateway 12s and the second intermediate gateway 12i₂ are found to support the QoS call requirements, then the first intermediate gateway 12i₁ signals the second intermediate gateway 12i₂ to determine whether it can support the QoS call to the final destination gateway 12d. As a further alternative, the "seeking" node (eg 12s or 12i₁) initially signals a next node (eg 12i₁ or 12i₂) to determine whether this next node (12i₁ or 12i₂) has sufficient resources available back to the seeking node (eg 12s or 12i₁), and if so signals its next node to do the same. Thus the signalling can be configured to determine the bandwidth between gateway nodes looking forward, backwards, or both.

If a guaranteed QoS call route has been agreed between the various gateways 12, the source gateway 12s forwards packets from a source 3s to the first intermediate gateway 12i₁, which forwards these to the second intermediate gateway 12i₂, and which in turn forwards the packets to the destination gateway 12d. Thus the packets from the source are routed or relayed via the two intermediate gateways 12i to the destination gateway 12d whilst maintaining the required level of bandwidth or other quality of service parameter.

Any return virtual path across the network from the destination gateway 12d to the source gateway 12s may or may not involve the same intermediate gateways, and will depend on the internal network activity and configuration, as well as the outcome of the setting up signalling protocol of figure 3.

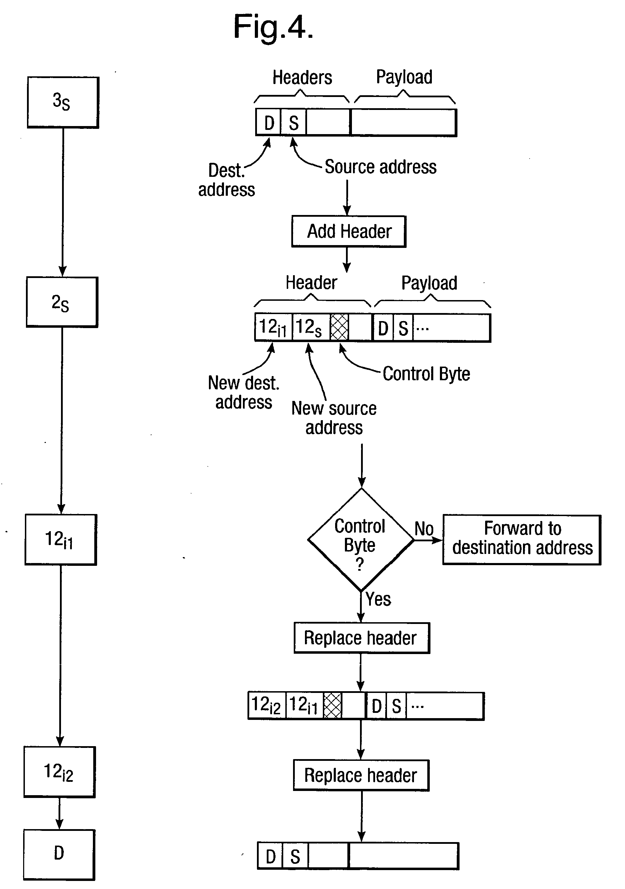

The skilled person will appreciate many known ways of implementing in an intermediate node (12i₁) the coupling of a session from a previous node (eg 12s) to a next or further node (eg 12i₂) in order to provide the requested QoS session. Figure 4 illustrates one example in which packets from the source and/or intermediate gateways are adjusted such that they are routed by the network via the intermediate gateways. For example packets from the source are encapsulated by the source gateway 12s such that they are delivered by the network to the first intermediate gateway 12i₁. The source gateway 12s adds an additional header having its own IP address as the source address (12s) and the first intermediate gateway (12i₁) as the destination address of the modified packet. This modified packet is then forwarded on to the network 1 which forwards it to the first intermediate gateway as normal. A special control byte or bit can be added to the packet header in order to identify the packet as one to be handled according to the embodiment.

The first intermediate gateway 12i₁ checks incoming packets for the special control byte. If the control byte is not present, the packet is handled as normal and forwarded towards the node identified by the destination address. However if the control packet is present, the header added by the source gateway 12s is removed to expose the original packet forwarded by the source device 3s. The first intermediate gateway 12i₁ then adds a new header similar to that added by the source gateway, but this time with its own address as the source address and the second intermediate gateway's address 12i₂ as the destination address. The control byte is also included in the packet, which is then forwarded onto the network where it is delivered to the second intermediate gateway. This process is repeated at each intermediate gateway until the last gateway before the destination gateway 12d, which simply removes the additional header to expose the original destination and source address before forwarding this on to the network 1. Thus the original packet with the original source (S) and destination (D) addresses in its respective source and destination fields is encapsulated within a larger specifically identified or tagged packet which is forwarded between intermediate gateways in order to bypass or avoid some unknown congested router of other traffic impediment within the network.

Other methods of implementing two linked tunnels of this kind will be known to those skilled in the art and can be implemented here. Example include PPTP, L2TP and L2F. Alternative methods of achieving the effects of this linked tunnelling, that is the coupling together of two sessions between nodes in order to provide a single QoS session according to the embodiment, will also be apparent to those skilled and can alternatively be used here.

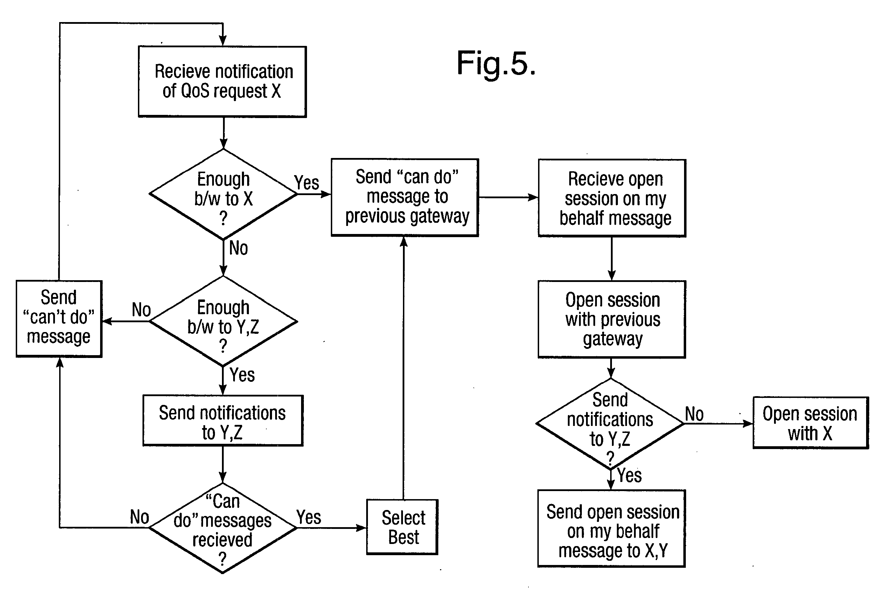

Referring now to figure 5, a flow chart of an intermediate gateway (eg 12i₁ or 12i₂) is shown. With minor modifications as would be clear to those skilled in the art, the flow chart is also applicable to the source gateway (eg 12s). The gateway receives a notification from a previous gateway such as the source gateway or a previous intermediate gateway. The notification is associated with the establishment of a QoS session according to an embodiment. A QoS session is a connection or call session between source and destination applications over an unknown network, and which has certain minimum requirements, such as a minimum bandwidth, latency, or a maximum acceptable level of congestion. These terms are well known and have one or more well known definitions which can be used here; for example bandwidth may refer to the average received bit or byte rate or some similar measure. A QoS session might be required for a Voice over IP (VoIP) phone application providing a voice call between the source computer and the destination computer over the Internet for example. The notification will therefore carry the requirements of the QoS session.

The gateway or edge node determines whether it has sufficient bandwidth (or whatever other QoS parameter is required) towards the destination node (in figure 5 this is generically labelled X - but which might correspond to 12i₂ in figure 3 for example) over the unknown (or at least not well known) network, eg the Internet. This may be achieved in a number of ways depending on the QoS parameter(s) involved as would be appreciated by those skilled in the art. For example an estimation algorithm may be invoked to determine whether there is sufficient bandwidth available between the gateway and the destination node X. If so, then the node signals back to the requesting or previous node a "can do" message to indicate that it can provide the required session.

Various method of estimating bandwidth or congestion levels or some other suitable parameter will be known to those skilled in the art. For example test data can be sent from the source node to the destination node, the destination node measuring the received bit rate. In another well known method, the round trip time in sending a packet from the source node to the destination node and back again can be used to estimate bandwidth or congestion. Detailed examples of bandwidth estimation methods include US2002/133614, WO02/069580, WO02/087276, and "The Addition of Explicit Congestion Notification (ECN) to IP", K. Ramakrishnan, EMC, September 2001. The later describes routers probabilistically marking packets when they approach congestion. This allows a receiving edge gateway to keep track of the fraction of marked packets originating from other edge gateways and use this information to evaluate the level of congestion between itself and its counterparts. This is can then used to decide whether to accept or deny opening of a new QoS-guaranteed session.

If there are insufficient resources between the node and the destination node X, then the gateway node determines whether the required resources exist between itself and another or further gateway node (Y or Z for example). These additional gateways Y,Z will be predetermined, or could be "discovered" by the node. These predetermined intermediate gateways may be stored in a table for example, and may include prioritising. Further each gateway may maintain a list of recently used intermediate gateways for different destinations. If the required resources, for example a minimum bandwidth, are not available to any of the associated gateways Y, Z over the unknown network, then a "can't do" message is sent back to the requesting or previous gateway. However if one or more of the other gateways Y, Z can be "connected with" or a session opened with the present node at the required bandwidth, then a notification request similar or the same as received by the present node is sent to this other gateway (Y or Z).

In an alternative arrangement, the present node need not determine whether there is sufficient resources between itself and another gateway Y, Z, and instead simply forward a notification straight away. In this scenario, the receiving gateway, in addition to determining whether it has sufficient resources with respect to the destination node X, additionally checks whether it has sufficient resources with respect to the gateway that sent the notification.

In a preferred arrangement, the gateway checks whether double the required resources are available between itself and the destination node X (or next node Y or Z). This allows for the possibility that one or more (hidden) routers or nodes 5 within the network may support both the session between the gateway and the destination node X (or Y,Z) as well as the session between the gateway and the previous gateway (the source say). In the figure, in this scenario, the two adjacent decision diamonds have "enough b/w to [X]" replaced with "enough b/w x2 to [X]".

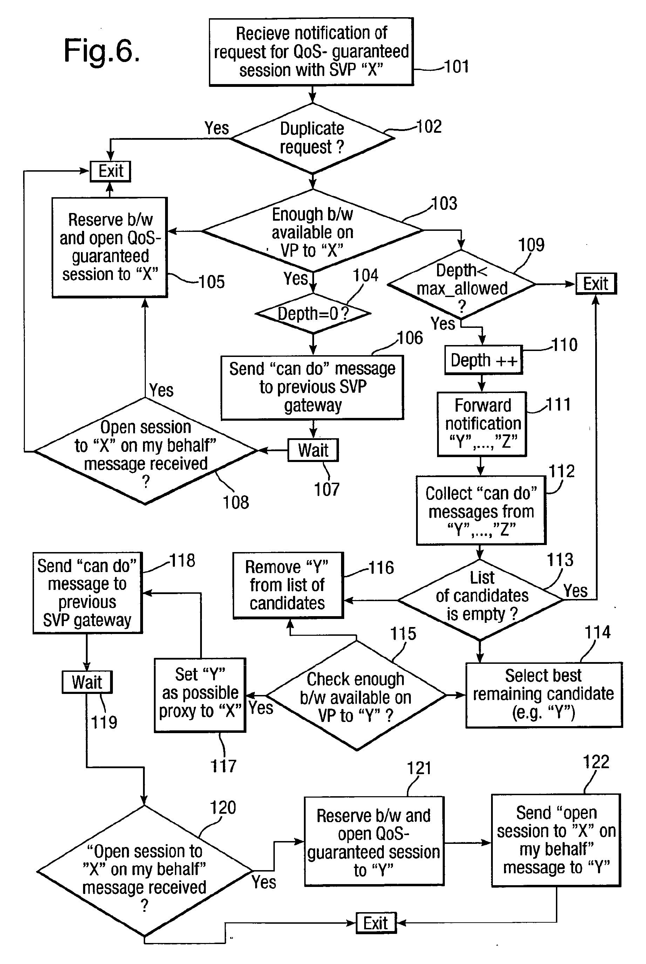

More generally, in a further embodiment, each gateway node checks whether it has n+1 bandwidth units, where n is the number of intermediate gateways involved. This is a precaution in case all of these gateways share one hidden resource (eg router) within the network. This embodiment is described in more detail below with respect to figure 6.

If the present node does not receive any "can do" messages in response to its notification requests, it sends a "can't do" message to the previous gateway. Otherwise a "can do" message is sent to the previous gateway. If more than one "can do" messages are received, the best gateway is selected, for example the one with the most resources available.

Once a "can do" message is sent back to the requesting or previous gateway, the present gateway awaits an open session request from the previous gateway. Receiving this, it opens a session according to known techniques. If the result of the earlier decision loop was that the present node could provide a suitable session directly to the destination node X, then a session opening request is sent to that node (X). However if a further intermediate node is involved, an open session request is sent to that (selected/best) node, and in due course a session is opened with it.

A cascade of sessions between intermediate gateways may be required in order to secure a pathway having the required resources between the source and the destination. However, apart from its immediate predecessor (previous) gateway and its immediate successor (next) gateway, each intermediate node will have no knowledge of any further intermediate nodes before or after it. This simplifies the signalling and control overhead associated with the embodiment.

At the source node (eg 12s), if one or more "can do" messages are received, it selects the best next intermediate node, and notifies its admission controller that it can admit the requested QoS session; despite the apparent lack of resources available between the source node and the destination node of the network. The requested session can then proceed, the various sessions between the intermediate gateways, the source and destination gateways having been set up or reserved.

Referring now to figure 6, a further embodiment is illustrated by way of a flow chart. In this embodiment, where the required quality of service requires say one bandwidth unit, each intermediate gateway checks whether it has n+1 bandwidth units where n is the total number of intermediate nodes, when determining whether it can open a session with another node. At step 101 an intermediate node receives a request to open an intermediate guaranteed QoS session with destination node X. The intermediate node checks whether it has recently already received this request (102) and if so indicates this to the requesting node. Assuming that the request is not a duplicate, then the node estimates whether it has enough bandwidth over the network to destination node X (103).

The number of previous intermediate nodes involved in the multi-session set-up is referred to here as the depth. If the depth = 0 then the node is the source node (i.e. the gateway which received the original request), if the depth is 1 then it is the first intermediate node and so on. The depth is an important factor in this embodiment as it affects the bandwidth required in order to open further sessions to the destination node. This is because it is assumed that in the worst case the intermediate nodes may share a resource (eg router) within the network and therefore when all the sessions are set up between the intermediate nodes there must be enough bandwidth for each session. Thus if one bandwidth unit B is required to provide the required quality of service session, then if one intermediate node is involved in creating two intermediate coupled sessions in order to provide the QoS session, it must check whether it has double the bandwidth (2B) in order to cover for the situation in which a network resource is shared. More generally, if the maximum allowed depth or number of intermediate nodes = n, then every intermediate node candidate must check for (n+1)B amount of bandwidth to its next destination, whether that be the destination node X or a further intermediate node.

Returning to the flow chart, the intermediate node checks whether the depth = 0 (104), that is whether it is the source node that has requested the session. If so (Y), then the bandwidth is reserved and the session opened to destination node X (105). If the depth does not equal 0 (N), then the request is from a previous node,and the current intermediate node sends a "can do" message to the requesting previous node (106). It then waits a predetermined period of time for further signalling from the previous node (107). If the current node receives an "open session" message from the previous node (108), it reserves bandwidth and opens a session with the destination node X (105). If no further message is received by the current node (N), the operation ends.

If the current node does not have enough estimated bandwidth to open a session with the destination node (103), then a different branch of the algorithm is followed. Here it is first determined whether the maximum depth of intermediate nodes has been exceeded (109), and if so the algorithm terminates, perhaps with an appropriate message back to the requesting intermediate node. Thus for example the system can set say 3 intermediate nodes as the maximum that can be employed in order to maintain other QoS factors for example, such as low latency. The max_allowed parameter may be progressively increased by the source node in renewed attempts to find a suitable path to the destination node. For example if maac_allowed (the maximum number of intermediate nodes allowed) is set initially at 1, but no "can do" messages are received, then the source increments max_allowed and again sends requests to the intermediate nodes. Similarly, max_allowed may be further incremented to 3, 4 and so on, until a maximum is reached according to the source node configuration.

If the depth hasn't exceeded the max_allowed parameter (ie the maximum number of intermediate nodes allowed), then the depth parameter or tag is incremented (110). The depth parameter may be a control byte sent within signalling packets or messages whose implementation would be appreciated by those skilled in the art. The node then forwards notifications or requests to further intermediate nodes Y,...Z (111), which will in turn perform the same algorithm here described. These further intermediate nodes may be from a predetermined list held by the current node and associated with the destination node X, for example intermediate nodes that have been successfully used in the past for the destination node X. The intermediate node then collects "can do" messages from these further intermediate nodes (for example sent from step 108 in the corresponding algorithm applied by a further intermediate node Y).

If however no "can do" messages are received (113), the current node sends a "can't do" message or perhaps doesn't respond to the requesting node, be it a previous intermediate node or the source node. If the list of "can do" candidate further intermediate nodes is not empty (N), then the best candidate Y is selected (114). The selection may be based on whether the next intermediate node Y has sufficient estimated bandwidth to open a session directly with the destination node X, as opposed to requiring a further intermediate node. Further parameters may be the amount of estimated bandwidth which may be returned to the current node in a signalling message for use in an appropriate selection algorithm.

The algorithm then checks whether the current intermediate node has sufficient estimated bandwidth to open a session with the candidate intermediate Y (115). As noted above this will depend on the depth level of intermediate nodes, such that the estimated bandwidth should be n+1 *(bandwidth required for QoS session), where n is the maximum depth. If there is insufficient bandwidth (N), then the current candidate node Y is removed from the list of candidates, and the next best intermediate node Z is selected (113, 114). Such a situation may occur for example if Y has the most available bandwidth to destination node Z, but not the best link back to the current requesting node.

When a selected node is determined to be able to provide sufficient bandwidth (Y), then this node Y is set as a possible proxy to the destination node X (117). A "can do" message is then sent to the requesting node (118) - a previous intermediate node or the source node. The current node then waits for further signalling from the requesting node (119).

If an "open session to X on my behalf' message is received from the requesting node (120), then the current node reserves bandwidth and opens a session with the next intermediate node Y (121). The current node also sends its own "open session to X on my behalf' message to the next intermediate node Y (122).

Each current node only deals with or interacts with its immediate previous and next nodes, the requesting node and either the destination node X or a further intermediate node Y. It does not need to be involved in signalling with or having knowledge of any further intermediate steps between the ultimate source node and the ultimate destination node. This eases implementation, and provides that each intermediate node only requires loading of a software module to implement the above described signalling algorithm, and some method of coupling its sessions with the requesting and next nodes - for example the packet re-directing method discussed above. In particular, the embodiment requires no knowledge of the network itself, or other "proxy" or intermediate nodes involved in a providing a particular QoS session.

Whilst the embodiments have been described primarily with respect to ensuring sufficient bandwidth is available to support a session of a requested level of QoS, other resources may alternatively or additionally be used. Examples include packet latency

The embodiments are preferably implemented with respect to a core or backbone IP network such as provided by one or more telecommunications providers, however they may also advantageously be applied to other IP networks including access networks. Further the embodiments can also find application to other known and unknown non-IP networks.

Whilst the source, destination, and intermediate nodes are preferably network edge or gateway nodes, they could alternatively be "known" nodes within or forming part of a larger known or unknown network. As a further alternative, these known nodes could be located in different (edge) networks coupled to the central network, and may not be directly connected to the main or central network.

In an alternative embodiment, the source node may "pro-actively" seek out pathways from itself via intermediate gateways to the (or a number of) destination gateways, and associate various QoS parameters such as available bandwidth with these pathways. The admission controller of the source node will then know in advance of session requests how many QoS sessions of a particular type it can support.

The embodiments allow the reduction of constraints on QoS-guaranteed sessions, allowing the opening many more simultaneously and reducing the waste of bandwidth in the core network (i.e. making better use of existing resources). This helps promote the take-up of demand for broadband applications and increases the associated revenue (i.e. QoS-guaranteed sessions could be charged separately from the basic broadband package, much in the same way as phonecalls add up to the line rental fee).

The embodiments have described identifying and re-directing session traffic using packet encapsulation by adding an extra header on to session packets to be router via an intermediate node. However other mechanisms for adjusting the header are also possible for example the header could be simply replaced or amended rather than by encapsulated within another packet.

The skilled person will recognise that the above-described apparatus and methods may be embodied as processor control code, for example on a carrier medium such as a disk, CD- or DVD-ROM, programmed memory such as read only memory (Firmware), or on a data carrier such as an optical or electrical signal carrier. For many applications embodiments of the invention will be implemented on a DSP (Digital Signal Processor), ASIC (Application Specific Integrated Circuit) or FPGA (Field Programmable Gate Array). Thus the code may comprise conventional programme code or microcode or, for example code for setting up or controlling an ASIC or FPGA. The code may also comprise code for dynamically configuring reconfigurable apparatus such as re-programmable logic gate arrays. Similarly the code may comprise code for a hardware description language such as Verilog™ or VHDL (Very high speed integrated circuit Hardware Description Language). As the skilled person will appreciate, the code may be distributed between a plurality of coupled components in communication with one another. Where appropriate, the embodiments may also be implemented using code running on a field-(re)programmable analogue array or similar device in order to configure analogue hardware.

The skilled person will also appreciate that the various embodiments and specific features described with respect to them could be freely combined with the other embodiments or their specifically described features in general accordance with the above teaching. The skilled person will also recognise that various alterations and modifications can be made to specific examples described without departing from the scope of the appended claims.

## Claims

1. A method of establishing a communications session having a predetermined resource requirement between a source node and a destination node associated with a network which comprises a plurality of interconnected nodes, the method comprising:
determining whether said resource requirement can be provided for a session between said source node and an intermediate node, and said intermediate node and a further said node;
establishing sessions providing said resource requirement between said source node and said intermediate node, and between said intermediate node and a further said node, said intermediate node coupling said sessions in order to provide a session providing said resource requirement between said source node and said destination node.

2. A method according to claim 1 wherein said further node is a second intermediate node and wherein said method further comprises:
determining whether said resource requirement can be provided for a session between said second intermediate node and a second further node;
establishing a further session providing said resource requirement between said second intermediate node and said second further node, said second intermediate node coupling said session with the session between said first and second intermediate nodes in order to provide a session providing said resource requirement between said source node and said destination node.

3. A method according to claim 1 wherein said further node is said destination node.

4. A method according to any preceding claim wherein said network is a packet-switched network.

5. A method according to any preceding claim wherein the predetermined resource requirement is one or more of the following: a minimum bandwidth; a minimum latency.

6. A method according to any preceding claim wherein said source, destination and intermediate nodes are edge gateway nodes connected to or forming part of the network.

7. A method according to any preceding claim further comprising first determining whether said resource requirement can be provided with a session between said source node and said destination node.

8. A method according to any preceding claim wherein said determining comprises estimating the available resource between respective nodes.

9. A method according to any one preceding claim wherein said establishing sessions comprises:
receiving session traffic intended for said destination node at a first said node,
identifying and re-directing said traffic to a said intermediate node;
receiving and identifying said re-directed traffic at said intermediate node;
further re-directing said traffic to said destination node.

10. A method of operating a source node in order to establish a communications session having a predetermined resource requirement between said source node and a destination node associated with said network which comprises a plurality of interconnected nodes, the method comprising:
determining whether said resource requirement can be provided for a session between said source node and an intermediate node, and said intermediate node and a further node;
establishing sessions providing said resource requirement between said source node and said intermediate node, and between said intermediate node and said further node such that said intermediate node couples said sessions in order to provide a session providing said resource requirement between said source node and said destination node using said intermediate node.

11. A method according to claim 10 wherein determining whether said resource requirement can be provided for a session between said intermediate node and said further node comprises signalling said intermediate node to indicate an estimated available resource between said intermediate node and said further node, and receiving said indication.

12. A method according to claim 10 or 11 wherein establishing sessions providing said resource requirement between said intermediate node and said further node comprises signalling said intermediate node to establish a said session between said intermediate node and said further node and to couple said session with a said session between the source node and the intermediate node.

13. A method according to any of claims 10 to 12 further comprising coupling a session between a preceding node and the source node and said session between the source node and the intermediate node.

14. A method according to claim 13 wherein said session traffic comprises packets addressed to said source node and said coupling comprises identifying and re-directing packets to said intermediate node.

15. A method of operating an intermediate node in order to establish a communications session having a predetermined resource requirement between a source node and a destination node associated with said network which comprises a plurality of interconnected nodes, the method comprising:
receiving a request from said source node to provide a session having said resource requirement to said destination node;
determining whether said resource requirement can be provided for a session between said intermediate node and a further said node;
establishing sessions providing said resource requirement between said source node and said intermediate node, and between said intermediate node and said further node;
coupling said sessions in order to provide a session providing said resource requirement between said source node and said destination node using said intermediate node.

16. A method according to claim 15 wherein said session traffic comprises packets addressed to said intermediate node and said coupling comprises identifying and re-directing packets to said further node.

17. A method according to claim 16 wherein said re-directing comprises encapsulating said session packet within a further node packet having said further node as the packet destination.

18. A method according to any one of claims 15 to 17 wherein determining comprises estimating the available resources between said intermediate node and said further node, said method further comprising signalling said source node to indicate said estimated available resource in response to said request.

19. A method according to any one of claims 15 to 18 wherein said further node is the destination node.

20. A method according to any one of claims 15 to 18 further comprising determining whether said resource requirement can be provided for a session between said further node and a second further node; and
establishing a session providing said resource requirement between said further node and said second further node such that said further node couples said session with said session between said session between said intermediate node and said further node in order to provide a session providing said resource requirement between said source node and said destination node using said intermediate further and second further nodes.

21. A method according to claim 20 wherein determining whether said resource requirement can be provided for a session between said further node and said second further node comprises signalling said further node to indicate an estimated available resource between said further node and said second further node, and receiving said indication.

22. A method according to claim 20 or 21 wherein establishing sessions providing said resource requirement between said further node and said second further node comprises signalling said further node to establish a said session between said further node and said second further node and to couple said session with a said session between the intermediate node and the further node.

23. A method according to any preceding claim wherein said determining comprises determining whether (n+1) times the resource requirement is available for one of the sessions, where n is the number of intermediate nodes.

24. Processor control code which when executed on a processor causes said processor to carry out a method according to any one of claims 1 to 232.

25. A processor control code medium carrying processor control code according to claim 24.

26. A system for establishing a communications session having a predetermined resource requirement between a source node and a destination node associated with a network which comprises a plurality of interconnected nodes, the method comprising:
means for determining whether said resource requirement can be provided for a session between said source node and an intermediate node, and said intermediate node and a further said node;
means for establishing sessions providing said resource requirement between said source node and said intermediate node, and between said intermediate node and a further said node, said intermediate node coupling said sessions in order to provide a session providing said resource requirement between said source node and said destination node.

27. Apparatus for a source node in order to establish a communications session having a predetermined resource requirement between said source node and a destination node associated with said network which comprises a plurality of interconnected nodes, the apparatus comprising:
means for determining whether said resource requirement can be provided for a session between said source node and an intermediate node, and said intermediate node and a further node;
means for establishing sessions providing said resource requirement between said source node and said intermediate node, and between said intermediate node and said further node such that said intermediate node couples said sessions in order to provide a session providing said resource requirement between said source node and said destination node using said intermediate node.

28. Apparatus for an intermediate node in order to establish a communications session having a predetermined resource requirement between a source node and a destination node associated with said network which comprises a plurality of interconnected nodes, the apparatus comprising:
means for receiving a request from said source node to provide a session having said resource requirement to said destination node;
means for determining whether said resource requirement can be provided for a session between said intermediate node and a further said node;
means for establishing sessions providing said resource requirement between said source node and said intermediate node, and between said intermediate node and said further node;
means for coupling said sessions in order to provide a session providing said resource requirement between said source node and said destination node using said intermediate node.
